# EUROPEAN PATENT APPLICATION

(11) **EP 0 606 478 A1**
(43) Date of publication of application: **20.07.1994**
(21) Application number: 92920912.0
(22) Date of filing: 30.09.1992
(51) Int. Cl.: G11B 7/00, G11B 20/10

(54) **DATA REPRODUCING APPARATUS**

(30) Priority: 30.09.1991 JP 250668/91
(71) Applicant: KABUSHIKI KAISHA TOSHIBA, Kawasaki-shi, Kanagawa-ken 210 (JP)
(72) Inventor: TANOUE, Koki, Yokohama-shi, Kanagawa-ken 235 (JP); YOSHIMARU, Tomohisa, Yokohama-shi, Kanagawa-ken 246 (JP); UENO, Sueo, Kawasaki-shi, Kanagawa-ken 214 (JP)
(74) Representative: Lehn, Werner, Dipl.-Ing.
(86) International application number: PCT/JP92/01253
(87) International publication number: WO 93/07614

(57) **Abstract**

A data reproducing apparatus which prevents erroneous reproduction of data even when the center of signal amplitude of data read out from an optical disk starts deviating. This apparatus includes read means for reading and outputting data stored in each block portion on the optical disk; binary means for converting the output signal to a binary signal by the use of a slice level; generation means for generating a charge width signal representing a phase difference between the binary signal and a clock signal, by comparing the binary signal with the clock signal outputted in a predetermined cycle when the read means reads the data stored in a data storage portion of the block portion; and means for changing the slice level of the binary means on the basis of the charge width signal generated by the generation means.

## Description

### Field of the Invention

The present invention relates to an information reproducing apparatus for reproducing information recorded on an optical disk by a mark length recording scheme.

### Background Art

In recent years, optical disks which record information in accordance with the mark length recording scheme have been put into practical use. According to this recording scheme, a block portion including a preamble portion and a data portion constitutes a unit of recording, and information is recorded using a large number of block portions. A predetermined code for synchronizing the block portions is recorded in the preamble portion. Recording data and a synchronization code are stored in the data portion.

The following binarizing apparatus is recently proposed (Japanese Patent Application No. 2-201533). To reproduce information from the above optical disk using this apparatus, the average value of detection signals of preamble portions recorded on the optical disk beforehand is obtained, and the data portions are binarized using the central level of amplitudes of these preamble portions on the basis of a slice level determined by this average value.

In this apparatus, even if the amount of laser beam reflected by the optical disk is changed depending on influences such as a focus offset of an optical head, variations in film sensitivities of the optical disk, changes in laser intensities, and distortions of an analog circuit and a binarizing circuit, a pit width and an interval length between the pits are accurately detected, thereby preventing erroneous data reproduction.

In this apparatus, however, erroneous reproduction cannot be prevented if the center of the amplitude of the data portion is shifted.

It is an object of the present invention to provide an information reproducing apparatus capable of preventing erroneous data reproduction even if the center of the amplitude of the signal of the data portion of all information read from the optical disk is shifted.

### Disclosure of Invention

An information reproducing apparatus according to the present invention comprises: reading means for reading data recorded in each block portion of a recording medium (optical disk) and outputting a read signal; binarizing means for binarizing the read signal using a slice level; generating means for generating a charge width signal representing a phase difference between a binarized signal and a clock signal by comparing the signal binarized by the binarizing means with a clock signal output at a predetermined interval; and changing means for changing the slice level of the binarizing means on the basis of the charge width signal generated by the generating means.

Even if the center of the amplitude of the read signal of the data portion is shifted, the slice level of the binarizing means is changed on the basis of the charge width signal generated upon the shift of the center of the amplitude, thereby preventing erroneous data reproduction.

### Brief Description of Drawings

FIG. 1 is a block diagram showing the arrangement of an information reproducing apparatus according to an embodiment of the present invention.

FIG. 2 is a block diagram showing the detailed arrangement of a synchronization code detection circuit and a window signal generation circuit shown in FIG. 1.

FIG. 3 is a circuit diagram showing the detailed arrangement of a write area detection circuit in FIG. 1.

FIG. 4 is a circuit diagram showing the detailed arrangement of a slice level correction circuit in FIG. 1.

FIG. 5 is a circuit diagram showing the detailed arrangement of an erroneous synchronization code detection circuit in FIG. 1.

FIG. 6 is a circuit diagram showing the detailed arrangement of a slice level control circuit in FIG. 1.

FIG. 7 is a view showing a format of information recorded on an optical disk in FIG. 1 and a signal for detecting a synchronization code included in the data portion of this information.

FIG. 8 is a view exemplifying the relationship between the waveform of a reproduced signal read from the optical disk in FIG. 1, the waveform of a binarized signal thereof, the waveform of a slice level control signal, and a slice level.

FIG. 9 is a view exemplifying the relationship between the waveform of a preamble portion of a reproduced signal read from the optical disk in FIG. 1, the waveform of a binarized signal thereof, and the waveform of a slice level control signal.

FIG. 10 is a view exemplifying the relationship between the waveform of a data portion of a reproduced signal read from the optical disk in FIG. 1, the waveform of a binarized signal thereof, and the waveform of a slice level control signal.

FIG. 11 is a waveform chart for explaining a binarized signal obtained when the amplitude of a reproduced signal read from the optical disk in FIG. 1 greatly varies to shift the slice level upward or downward from a normal level.

FIG. 12 is a waveform chart showing data (1 to 7) according to a mark length recording scheme and corresponding mark-length-modulated waveforms and explaining binarized signals and slice level control signals which are obtained when the reproduced signal amplitudes corresponding to the modulated waveforms greatly vary.

### Preferred Embodiment

An embodiment according to the present invention will be described with reference to the accompanying drawings.

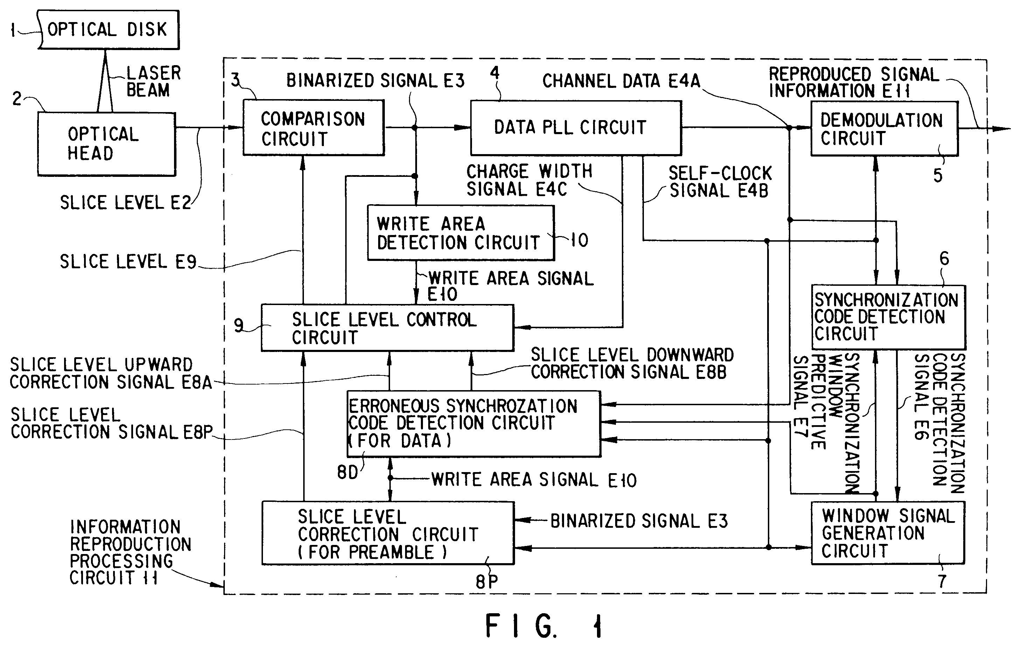

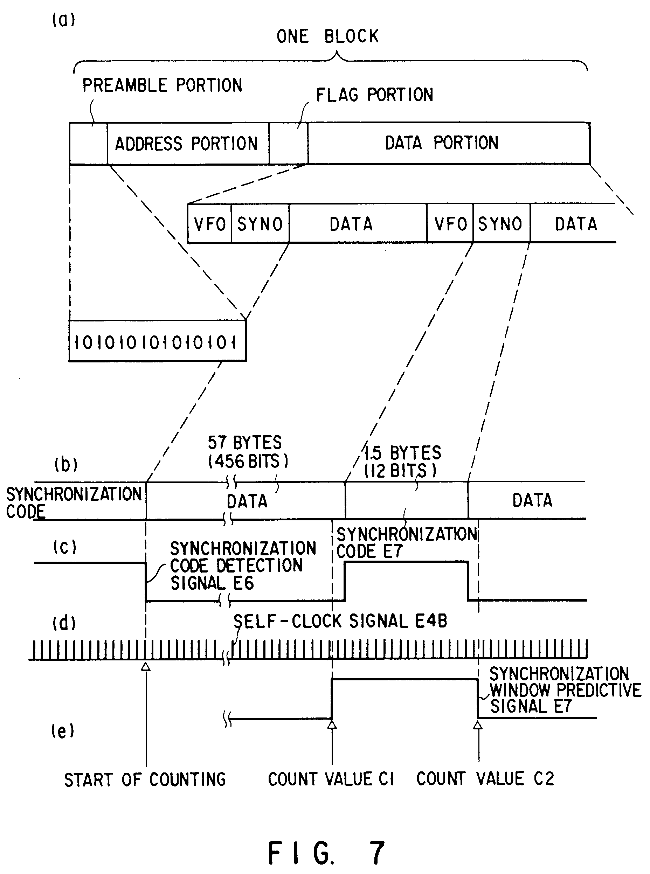

FIG. 1 shows the arrangement of an information reproducing apparatus according to an embodiment of the present invention. The apparatus of this embodiment extracts, from optical disk 1, information having a format shown in FIG. 7(a) and recorded by a mark length recording scheme.

The information in optical disk 1 is recorded as a plurality of series blocks each having a structure shown in the upper portion in FIG. 7(a). A preamble portion at the start of each block consists of a 15-byte 1010 pattern. When a 5-byte portion of the 15-byte pattern is read, this portion is determined to represent the preamble portion. Upon detection of this preamble portion, the respective blocks are synchronized with each other. The data portion of each block alternately include a plurality of synchronization codes and data. This data is assigned with, e.g., 57 bytes. The synchronization code is assigned with, e.g., 1.5 bytes.

The embodiment in FIG. 1 has the following three elements.
(1) In binarizing a preamble portion formed at the start of each block, a binarizing slice level is determined by the average value of binarized signals (slice level = average value).
(2) In a data portion of each block, a charge width signal representing a phase difference between a predetermined clock signal and a binarized signal is obtained, and the slice level is determined to reduce the charge width signal (i.e., to reduce the phase difference).
(3) In a synchronization code portion included in data of each block at a predetermined interval (e.g., every 58.5 bytes), when a code (erroneous synchronization code) different from a correct synchronization code is read from the optical disk, the independently of a process in (2). (That is, when an erroneous synchronization code is read due to an excessively high slice level, the slice level is decreased by a predetermined amount; and when an erroneous synchronization code is read due to an excessively low slice level, the slice level is increased by a predetermined amount.)

The present invention can be constituted by at least two of the three processes described above. The embodiment shown in FIG. 1 exemplifies a combination of all the three processes.

Optical disk 1 used as an information recording medium in the apparatus shown in FIG. 1 is obtained such that a doughnut-like metal coating layer as of tellurium or bismuth is coated on the surface of a circular substrate made of, e.g., glass or plastic. A notched portion, i.e., a reference mark is formed near the central portion of the metal coating layer.

Tracks for concentrically or spirally recording information are formed on optical disk 1. These tracks are divided into 256 sectors "0 to 255" using the reference mark as "0".

A plurality of blocks each having a predetermined length and recorded with information are prepared on optical disk 1. Variable-length information is recorded across a plurality of blocks. The respective blocks have different numbers of sectors depending on the positions on optical disk 1.

A block header (preamble portion) including a fixed code (e.g., a synchronization code), a block number, a track number, and the like is recorded at the start position of each block.

The synchronization code has a predetermined period longer than a pit period but shorter than a sector period and is constituted by a pattern having a predetermined bit length (e.g., a 5-byte 1010 pattern). This block header is recorded beforehand during the manufacture of optical disk 1. Predetermined information is recorded in an area (data portion) following this block header.

If each block is not terminated in correspondence with the switching position of a sector, a block gap is formed, so that each block necessarily starts from a position corresponding to the switching position of a sector.

The fixed code is a code having a ratio of a pit width to an interval between the pits being 1 : 1 (duty ratio: 50%). Note that the fixed code may have the ratio of the pit width to the pit/pit interval being 1 : n (n = 2, 3,....)
This optical disk 1 is mounted on a spindle motor (not shown). Optical disk 1 is rotated by this spindle motor at a predetermined speed. Optical head 2 is disposed below the lower surface of optical disk 1. Optical head 2 is used to record information on optical disk 1 or reproduce the information from optical disk 1.

Optical head 2 is a know optical head constituted by a semiconductor laser oscillator, a collimator lens, a beam splitter, an objective lens, an astigmatic optical system, a lens actuator, photodetection circuit (photodiode), and the like (none are shown).

Optical head 2 is arranged to be radially movable on optical disk 1 by a moving mechanism (not shown) constituted by, e.g., a linear motor. Optical head 2 is moved to a target track serving as a recording or reproduction object in accordance with an instruction from a control circuit (not shown).

The semiconductor laser oscillator in optical head 2 generates a laser beam whose light intensity is modulated in accordance with information to be recorded when mark length information is to be recorded on optical disk 1. The semiconductor laser oscillator generates a laser beam having a predetermined light intensity when information is to be reproduced from optical disk 1.

In the information reproduction mode, reproduced signal E2 output from the photodetection circuit in optical head 2 is supplied to information reproduction processing circuit 11. The information reproduction processing circuit 11 is a circuit for outputting reproduced signal information Ell in accordance with reproduced signal E2 supplied from optical head 2.

Information reproduction processing circuit 11 is constituted by comparison circuit (binarizing circuit] 3, data PLL circuit 4, demodulation circuit 5, synchronization code detection circuit 6, window signal generation circuit 7, slice level correction circuit 8P, erroneous synchronization code detection circuit 8D, slice level control circuit 9, and write area detection circuit 10.

Comparison circuit 3 converts the analog current value of reproduced signal E2 supplied from optical head 2 into an analog voltage signal, amplifies the analog voltage signal, binarizing the amplified analog voltage signal with slice level E9 from slice level control circuit 9, and outputs binarized signal E3. This binarized signal E3 is output to data PLL circuit 4, write area detection circuit 10, and slice level control circuit 9.

Write area detection circuit 10 detects a write area of information including the preamble and data portions in accordance with binarized signal E3 from comparison circuit 3 and outputs write area signal E10. Write area signal E10 is output to slice level correction circuit 8P, erroneous synchronization code detection circuit 8D, and slice level control circuit 9.

Data PLL circuit 4 is constituted by an electronic circuit including a voltage-controlled oscillator (VCO), a phase comparator, a low-pass filter, and the like. Using binarized signal E3 output from comparison circuit 3, data PLL circuit 4 independently outputs self-clock signal E4B, channel data E4A phase-locked with self-clock signal E4B, and charge width signal E4C representing a phase difference between the leading/trailing edge of binarized signal E3 (rectangular wave) and self-clock signal E4B.

Channel data E4A and self-clock signal E4B from data PLL circuit 4 are output to demodulation circuit 5, synchronization code detection circuit 6, and erroneous synchronization code detection circuit 8D. Charge width signal E4C from data PLL circuit 4 is output to slice level control circuit 9. Self-clock signal E4B is also supplied to window signal generation circuit 7 and slice level correction circuit 8P.

Demodulation circuit 5 demodulates channel data E4A from data PLL circuit 4 on the basis of self-clock signal E4B and outputs digital information in channel data E4A outside the apparatus as reproduced signal information Ell.

Synchronization code detection circuit 6 detects synchronization codes included in the data portion of each block and outputs synchronization code detection signal E6 to window signal generation circuit 7.

Window signal generation circuit 7 predicts the position of the next synchronization code with reference to the signal edge of synchronization code detection signal E6 and generates synchronization window predictive signal E7 having a signal width slightly larger than that of the synchronization code at this predicted position. This synchronization window predictive signal E7 is output to synchronization code detection circuit 6 and erroneous synchronization code detection circuit 8D.

Erroneous synchronization code detection circuit 8D receives synchronization window predictive signal E7 from window signal generation circuit 7 and channel data E4A and self-clock signal E4B from data PLL circuit 4 and performs a process for changing slice level E9 by a predetermined amount when an erroneous synchronization code different from a correct synchronization code is detected in the synchronization codes included in the data of each block at a predetermined interval.

More specifically, when an erroneous synchronization code is detected due to excessively high slice level E9, erroneous synchronization code detection circuit 8D generates slice level downward correction signal E8B for decreasing slice level E9 by a predetermined amount. When an erroneous synchronization code is detected due to excessively low slice level E9, erroneous synchronization code detection circuit 8D generates slice level upward correction signal E8A for increasing slice level E9 by a predetermined amount. Slice level upward and downward correction signals E8A and E8B generated by erroneous synchronization code detection circuit 8D are supplied to slice level control circuit 9.

Slice level correction circuit 8P detects a preamble portion in accordance with binarized signal E3 from comparison circuit 3 and self-clock signal E4B from data PLL circuit 4 and outputs slice level correction signal E8P for the preamble portion to slice level control circuit 9.

Slice level control circuit 9 determines slice level E9 in accordance with binarized signal E3 from comparison circuit 3, charge width signal E4C from data PLL circuit 4, write area signal E10 from write area detection circuit 10, slice level correction signal E8P from slice level correction circuit 8P, and slice level upward/downward correction signal E8A/E8B from erroneous synchronization code detection circuit 8D. Comparison circuit 3 binarizes reproduced signal E2 using this slice level E9.

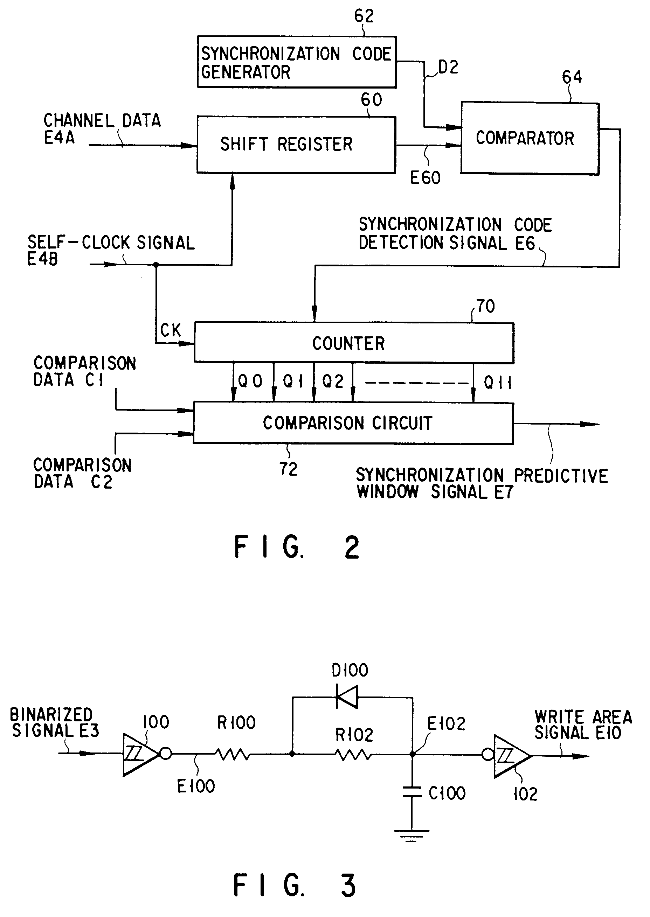

FIG. 2 shows the detailed arrangement of the synchronization code detection circuit and the window signal generation circuit in FIG. 1. Channel data E4A from data PLL circuit 4 is a signal of logic level of "1" or "0" corresponding to a change in level of binarized signal E3. A 1/0 bit string of channel data E4A representing the contents of binarized signal E3 is input to shift register 60 in FIG. 2 in synchronism with self-clock signal E4B.

The data input to shift register 60 is sequentially input to comparator 64 as parallel data E60 in units of 12 bits. Predetermined synchronization code D2 as comparison data is input from synchronization code generator 62 to comparator 64. Comparator 62 compares synchronization code D2 with data E60 changing at a timing of self-clock signal E4B in accordance with the contents of channel data E4A.

When data E60 coincides with code D2 during the generation interval of synchronization window predictive signal E7 (to be described later), comparator 64 detects the synchronization code of the data portion shown in FIGS. 7(a) and 7(b) from channel data E4A. When this synchronization code is detected, comparator 64 outputs synchronization code detection signal E6.

Synchronization code detection signal E6 is supplied to the reset input of 12-bit counter 70. Counter 70 receives self-clock signal E4B as a clock input. When counter 70 is reset at the trailing edge of signal E7, it starts counting self-clock signals E4B (see FIGS. 7(c) and 7(d)).

A count output (Q0 to Qll) from counter 70 is input to comparison circuit 72. This circuit 72 also receives two comparison data C1 and C2.

The lengths of the data and the synchronization code in the data portion in FIG. 7 are predetermined (e.g., the data has a 456-byte length and the synchronization code has a 12-bit length). For this reason, when counter 70 starts counting clock pulses from the trailing edge of signal E7, a correspondence between a count value range and the generation timing of a synchronization code can be estimated. For this purpose, comparison data C1 and C2 are set to cover a 12-bit wide synchronization code. When the count output (Q0 to Qll) from counter 70 reaches comparison data C1 and C2, comparison circuit 72 detects the presence of the synchronization code.

More specifically, when a synchronization code is detected in the count range of 456 to 468 (= 456 + 12) of counter 70, the synchronization code can be expected to be detected. Let comparison data C1 be 453 (= 456 - 3) and comparison data C2 be 471 (= 468 + 3), provided that a margin is given to be three pulses to be counted. Comparison circuit 72 properly detects the position of the synchronization code.

As described above, the pieces of information preceding and succeeding to the synchronization code are masked with data C1 and C2. A window signal for properly extracting the synchronization code, i.e., synchronization predictive window signal E7 is obtained from comparison circuit 72.

FIG. 3 shows the detailed arrangement of write area detection circuit 10 in FIG. 1. Binarized signal E3 from comparison circuit 3 is input to output inverting inverter 100 having hysteresis characteristics. Output E100 from inverter 100 is input to a network circuit comprising resistors R100 and R102, a diode D100, and capacitor C100. Capacitor C100 is charged in accordance with the potential of output E100 and applies charge potential E102. This potential E102 is applied to input inverting inverter 102 having hysteresis characteristics. Inverter 102 outputs write area signal E10 having a potential having a phase opposite to that of potential E102.

In the network circuit in FIG. 3, when binarized signal E3 rises, output E100 falls. The charge of capacitor C100 charged with potential E102 is removed through a series circuit (low resistance) of forward-biased diode D100 and resistor R100. In this case, since potential E102 is removed with a small time constant, this potential is set to low level within a very short period of time, and write area signal E10 immediately rises.

On the other hand, binarized signal E3 falls, output E100 rises. In this case, the internal resistance of diode D100 becomes almost infinite because diode D100 is reverse-biased. Capacitor C100 is charged through a series circuit (high resistance) of resistors R100 and R102. In this case, since potential E102 is increased with a large time constant, write area signal E10 will not be set to high level within a very short period of time.

As a result, while capacitor C100 is charged and discharged by binarized signal E3 whose level is changed at a period shorter than that of the charge and discharge time constants of capacitor C100, potential E102 is not set to a high potential. For this reason, write area signal E10 as an inverter output is kept high. That is, while binarized signal E3 is kept applied, inverter 102 keeps outputting write area signal E10 of high level.

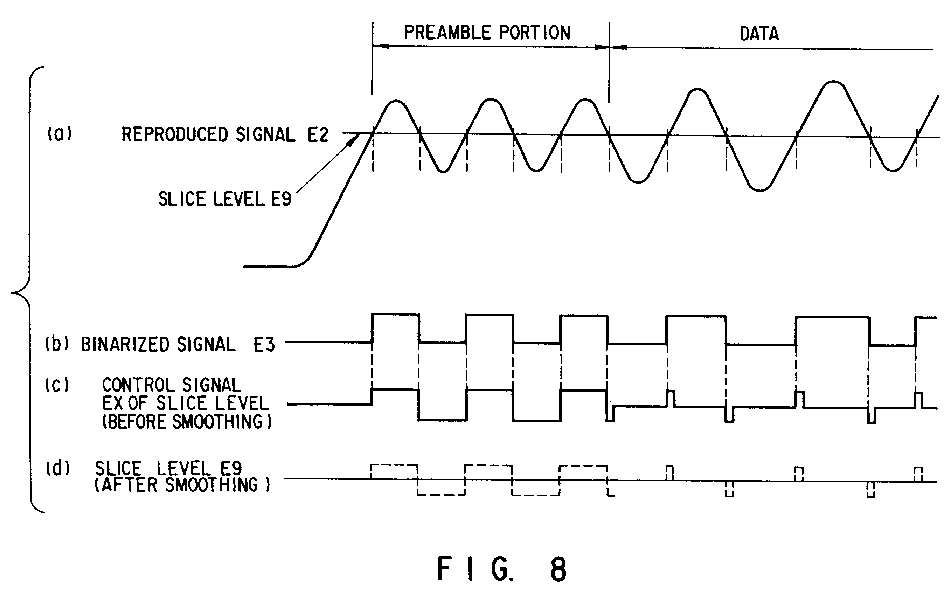

FIG. 8 exemplifies the waveform of a reproduced signal read from optical disk 1 in FIG. 1, the waveform of a binarized signal thereof, the waveform of a slice level control signal, and a slice level. FIG. 8(a) shows the preamble and data portions of reproduced signal E2 read from optical disk 1 and binarizing slice level E9. FIG. 8(b) shows binarized signal E3 obtained by binarizing reproduced signal E2 with slice level E9. FIG. 8(c) shows slice level control signals EX detected in the preamble and data portions of reproduced signal E2 prior to smoothing (averaging). FIG. 8(d) shows slice levels E9 obtained after slide level control signals EX are smoothed (averaged).

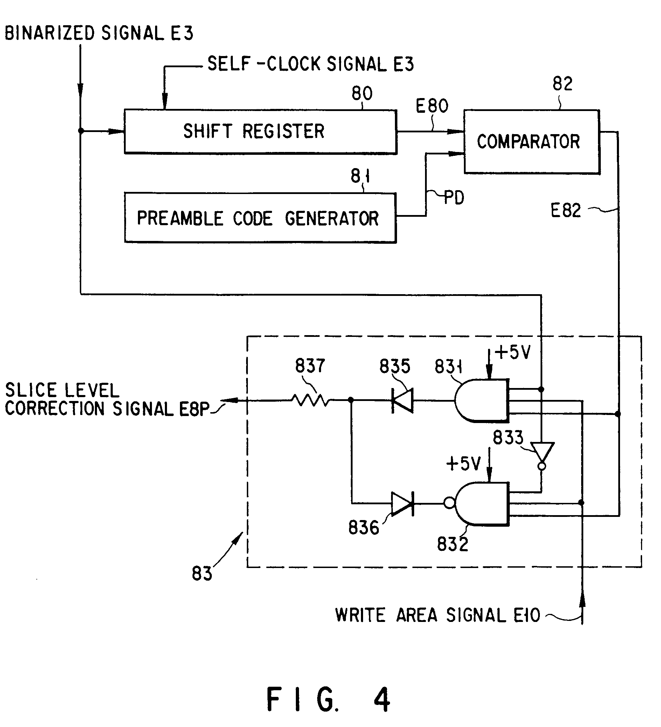

FIG. 4 shows the detailed arrangement of slice level correction circuit 8P in FIG. 1. Binarized signal E3 shown in FIG. 8(b) is input to shift register 80 in synchronism with self-clock signal E4B. The data input to shift register 80 is sequentially input to comparator 82 as parallel data E80 in units of, e.g., 5 bytes. Comparator 82 receives predetermined preamble code PD from preamble code generator 81 as comparison data.

Comparator 82 compares code PD with data E80 changing at a timing of self-clock signal E4B in accordance with the contents of binarized signal E3. If data E80 coincides with data PD, comparator 82 supplies preamble code detection signal E82 to slice level correction signal generation circuit 83.

Slice level correction signal generation circuit 83 is constituted by 3-input AND gate 831, 3-input NAND gate 832, inverter 833, diode 835, diode 836, and resistor 837.

Preamble code detection circuit E82 from comparator 82 is input to AND gate 831 and NAND gate 832. These gates also receive write area signal E10 from write area detection circuit 10. Binarized signal E3 from comparison circuit 3 is input to AND gate 831. A signal obtained by inverting the level of this binarized signal by inverter 833 is input to NAND gate 832.

AND gate 831 outputs an output to one terminal of resistor 837 through an anode-cathode path of diode 835. The output from AND gate 831 is set at high level (+5 V) when the AND conditions of the three inputs are established. However, the output from the AND gate 831 is set at low level (0 V) when the AND conditions are not established. NAND gate 832 supplies an output to one terminal of resistor 837 through a cathode-anode path of diode 836. The output from NAND gate 832 is set at low level (0 V) when the NAND conditions of the three inputs are established. The output from NAND gate 832 is set at high level (+5 V) when the NAND conditions of the three inputs are not established. The outputs from gates 831 and 832 are synthesized at one terminal of this resistor 837, and slice level correction signal E8P for the preamble portion is obtained from the other terminal of resistor 837. This signal E8P corresponds to slice level control signals EX (FIG. 8(c)) prior to smoothing (averaging) for the preamble portion.

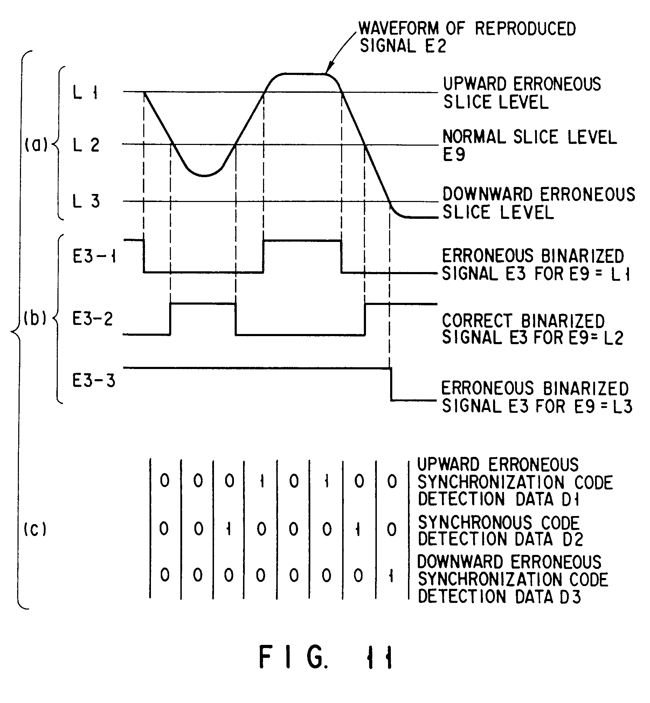

FIG. 11 shows binarized signal E3 obtained when the amplitude of reproduced signal E2 read from optical disk in FIG. 1 greatly varies and slice level E9 is greatly shifted upward or downward from normal level L2.

When slice level E9 (FIG. 11(a)) is normal level L2, binarized signal E3 (FIG. 11(b)) becomes signal E3-2 having a normal waveform. Data D2 (FIG. 11(c)) for setting data "1" at an edge of this normal waveform signal E3-2 and setting data "0" at other portions of signal E3-2 can be used as data for detecting the normal synchronization code.

If slice level E9 (FIG. 11(a)) is upward erroneous slice level L1 erroneously shifted to a higher level, binarized signal E3 (FIG. 11(b)) becomes signal E3-1 having an abnormal waveform. Data D1 (FIG. 11(c)) for setting data "1" at a signal age of this abnormal waveform signal E3-1 and data "0" at other portions of signal E3-1 can be used as data for detecting the upward erroneous synchronization code obtained when slice level E9 is erroneously shifted to the higher level.

If slice level E9 (FIG. 11(a)) is downward erroneous slice level L3 erroneously shifted to a lower level, binarized signal E3 (FIG. 11(b)) becomes signal E3-3 having an abnormal waveform. Data D3 (FIG. 11(c)) for setting data "1" at a signal edge of this abnormal waveform signal E3-3 and data "0" at other portions of signal E3-3 can be used as data for detecting a downward erroneous synchronization code obtained when slice level E9 is erroneously shifted to the lower level.

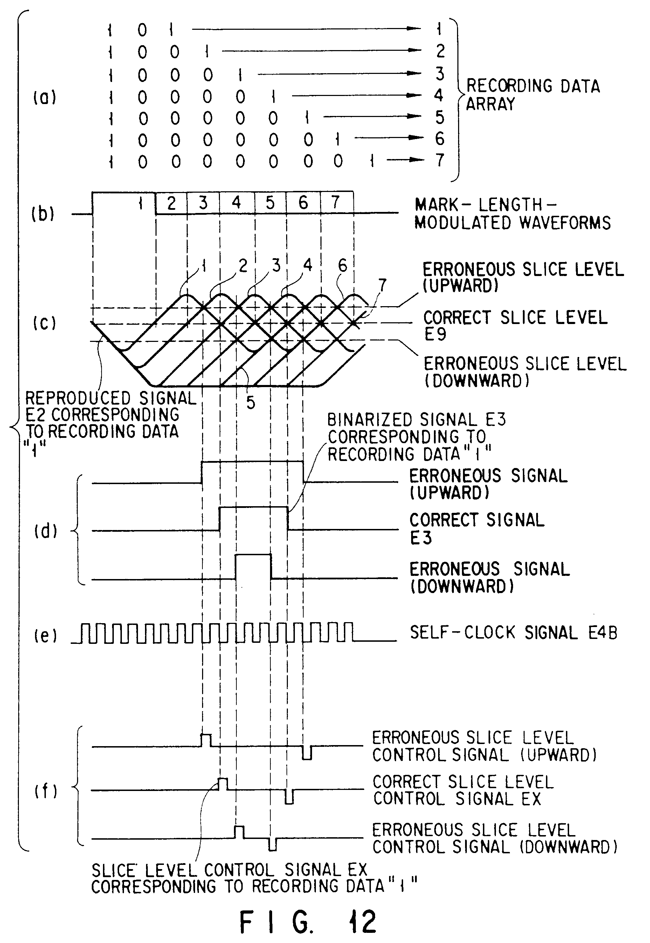

FIG. 12 shows data (1 to 7) according to the mark length recording scheme, corresponding mark-length-modulated waveforms, and also shows binarized signals and slice level control signals which are obtained when the amplitudes of reproduced signals corresponding to these modulated waveforms greatly vary.

When recording data "1" to "7" shown in FIG. 12(a) are recorded by mark length modulation (FIG. 12(b)), reproduced signal waveforms from optical disk 1 are shown in FIG. 12(c). Take the waveform of recording data "1" as an example. If the slice level is normal (level L2 in FIG. 11(a)), correct binarized signal E3 is obtained (FIG. 12(d)). If the signal edge of this binarized signal E3 is detected using self-clock signal E4B (FIG. 12(e)), correct slice level control signal EX (FIG. 12(f)) is obtained.

If the slice level is abnormal (level L1 or L3 in FIG. 11(a)), erroneous binarized signal E3 is obtained (FIG. 12(d)). When the signal edge of this erroneous binarized signal E3 is detected using self-clock signal E4B (FIG. 12(e)), erroneous slice level control signal EX (FIG. 12(f)) is obtained.

Erroneous slice levels L1 and L3 which cause erroneous slice level control signals EX are corrected by slice level upward and downward correction signals E8A and E8B, respectively.

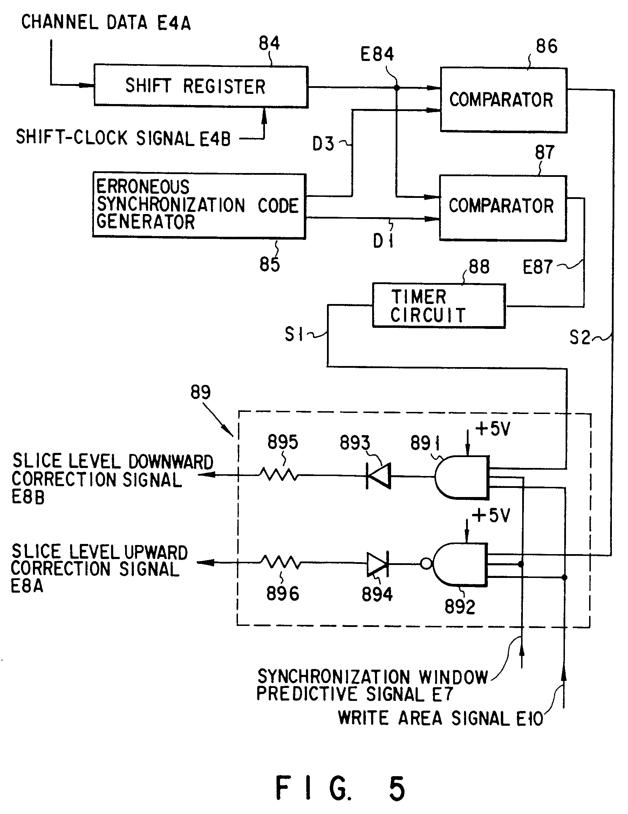

FIG. 5 shows the detailed arrangement of erroneous synchronization code detection circuit 8D in FIG. 1. Channel data E4A extracted from the data portion of reproduced signal E2 in FIG. 8(a) is input to shift register 84 in synchronism with self-clock signal E4B. The data input to shift register 84 is sequentially input to comparators 86 and 87 as parallel data E84 in units of, e.g., 12 bits.

Comparator 86 receives downward erroneous synchronization code detection data D3 (FIG. 8(c)) from erroneous synchronization code generator 85 as comparison data. Comparator 87 receives upward erroneous synchronization code detection data D1 (FIG. 8(c)) from erroneous synchronization code generator 85 as comparison data.

Comparator 87 compares code D1 with data E84 changing at a timing of self-block signal E4B in accordance with the contents of channel data E4A. When data E84 coincides with data D1, comparator 87 generates coincidence signal E87. This coincidence signal E87 triggers timer circuit 88. Timer circuit 88 then generates upward erroneous synchronization code detection signal S1 set at high level for a predetermined period of time. This predetermined period of time is appropriately determined by experiments. This upward erroneous synchronization code detection signal S1 is supplied to slice level correction signal generation circuit 89.

Comparator 86 compares code D3 with data E84 changing at a timing of self-clock signal E4B in accordance with the contents of channel data E4A. If data E84 coincides with data D3, comparator 86 supplies downward erroneous synchronization code detection signal S2 to slice level correction generation circuit 89.

Slice level correction signal generation circuit 89 is constituted by 3-input AND gate 891, 3-input NAND gate 892, diodes 893 and 894, and resistors 895 and 896.

Upward erroneous synchronization code detection signal S1 is input from timer circuit 88 to AND gate 891. Downward erroneous synchronization code detection signal S2 is input from comparator 86 to NAND gate 892. These gates also receive write area signal E10 from write area detection circuit 10 and synchronization window predictive signal E7 from window signal generation circuit 7.

AND gate 891 supplies an output to one terminal of resistor 895 through an anode-cathode path of diode 893. This output is set at high level (+ 5 V) when the AND conditions of the three inputs are established. When the AND conditions are not established, this output is set at low level (0 V). NAND gate 892 supplies an output to one terminal of resistor 896 through a cathode-anode path of diode 894. This output is set at low level (0 V) when the NAND conditions of the three inputs are established. When the NAND conditions are not established, this output is set at high level (+ 5 V). Slice level upward correction signal E8A for the data portion is obtained from the other terminal of resistor 896, and slice level downward correction signal E8B is obtained from the other terminal of resistor 895. These correction signals are supplied to slice level control circuit 9 to correct slice level E9.

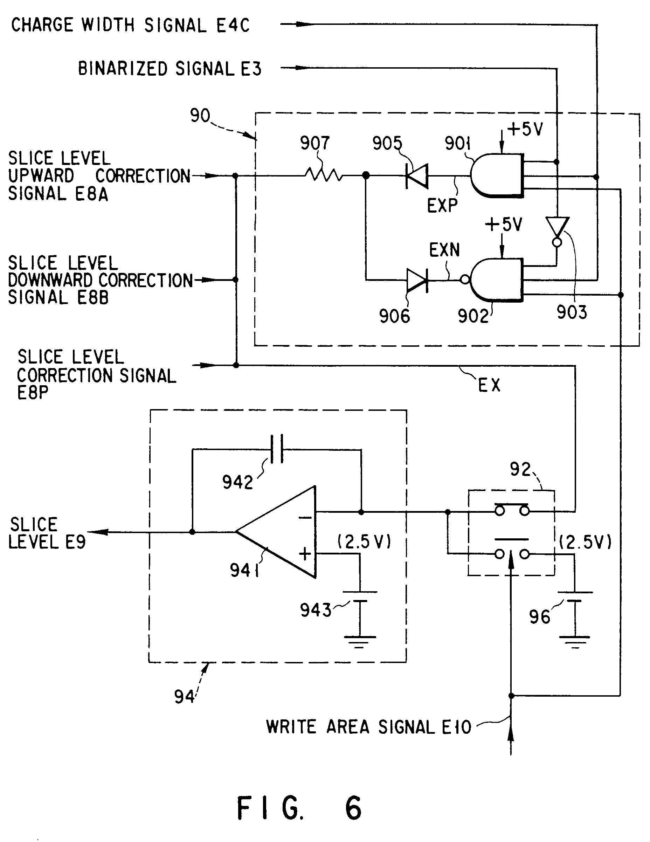

FIG. 6 shows the detailed arrangement of slice level control circuit 9 in FIG. 1. Binarized signal E3 from comparison circuit 3 in FIG. 1, charge width signal E4C from data PLL circuit 4, and write area signal E10 from write area detection circuit 10 are supplied to slice level correction signal generation circuit 90.

Slice level correction signal generation circuit 90 is constituted by 3-input AND gate 901, 3-input NAND gate 902, inverter 903, diodes 905 and 906, and resistor 907.

Charge width signal E4C and write area signal E10 are input to AND gate 901 and NAND gate 902, respectively. Binarized signal E3 is input to AND gate 901, and a signal obtained by inverting the level of this binarized signal by inverter 903 is input to NAND gate 902.

AND gate 901 supplies an output EXP to one terminal of resistor 907 through an anode-cathode path of diode 905. This output EXP is set at high level (+5 V) when the AND conditions of the three inputs are established. However, when the AND conditions are not established, the output EXP is set at low level (0 V). NAND gate 902 supplies an output EXN to one terminal of resistor 907 through a cathode-node path of diode 906. This output EXN is set at low level (0 V) when the NAND conditions of the three inputs are established. When the NAND conditions are not established, this output EXN is set at high level (+ 5 V). Outputs EXP and EXN from gates 901 and 902 are synthesized at one terminal of resistor 907. A slice level correction signal for the data portion is obtained from the other terminal of resistor 907.

Preamble slice level correction signal E8P from slice level correction signal generation circuit 83 in FIG. 4, the data slice level correction signal (EXP + EXN) from slice level correction signal generation circuit 90 in FIG. 6, slice level correction signal from slice level correction signal generation circuit 89 in FIG. 5 are added and synthesized by wired-OR in the circuit in FIG. 6, thereby obtaining slice level control signal EX prior to smoothing (averaging).

This slice level control circuit EX is input to smoothing circuit 94 through switch circuit 92. A predetermined fixed slice level (+2.5 V) is input from voltage source 96 to smoothing circuit 94 through switch circuit 92. Switch 92 is controlled by write area signal E10. When signal E10 is set at high level (write area), only the circuit of signal EX is rendered conductive. However, when signal E10 is set at low level (except for the write area), only the circuit of the fixed slice level is rendered conductive.

Smoothing circuit 94 is constituted by operational amplifier 941, integrating capacitor 942, and reference voltage source 943. Reference voltage source 943 applies a reference voltage of +2.5 V to the noninverting input of operational amplifier 941. An output from operational amplifier 941 is fed back to its inverting input through capacitor 942, thereby constituting an integrator. When slice level control signal EX is input, this integrator is operated such that the voltage to the inverting input is converged (imaginary short) to the reference voltage of +2.5 V in accordance with its feedback function.

The integrator in smoothing circuit 94 outputs upward-tendency potential slice level E9 to set the inverting input of operational amplifier 941 to 2.5 V when control signal EX is set at 2.5 V or less, and outputs downward-tendency potential slice level E9 to set the inverting input of operational amplifier 941 to 2.5 V when control signal EX is set at 2.5 V or more. These upward- and downward-tendency potentials are averaged by an integration operation of the integration circuit (i.e., the changes in control signal EX are smoothed), thereby obtaining slice level E9 free from ripple components.

The following control operations are performed by the above slice level control signal EX:
(1) control for determining the slice level of the preamble portion by the average value of binarized signals;
(2) control for determining the slice level to decrease the charge width signal in the data portion; and
(3) control for changing the slice level by a predetermined amount when an erroneous synchronization code is detected in the data.

The control operation in (1) will be described below first. This control is performed by circuit 83 in FIG. 4.

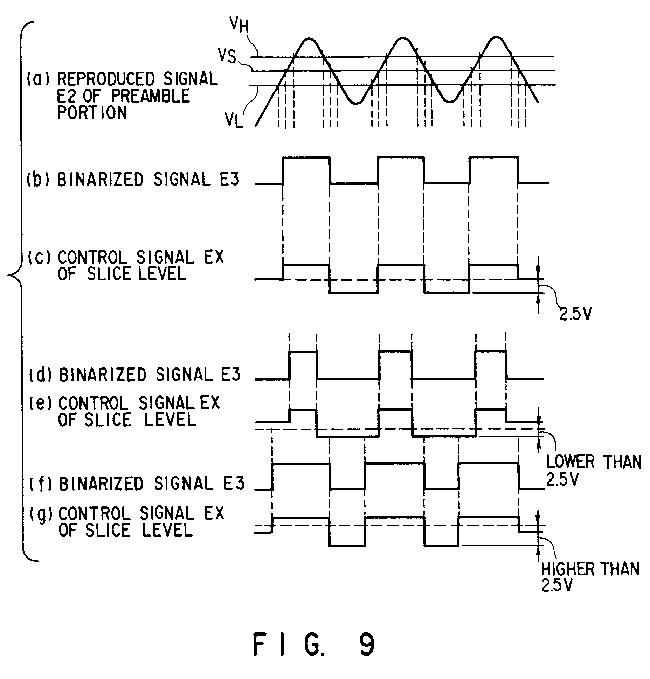

FIG. 9 shows the relationship between the waveform of a preamble portion of a reproduced signal read from an optical disk in FIG. 1, the waveform of a binarized signal thereof, and the waveform of a slice level control signal. FIG. 9 is a view for explaining the binarizing slice level setting operation in the preamble portion of reproduced signal E2 in FIG. 9.

FIG. 9(a) shows correct slice level VS for the preamble portion of reproduced signal E2, upward slice level VH shifted upward from correct slice level VS, and downward slice level VL shifted downward from correct slice level VS. FIG. 9(b) shows binarized signal E2 obtained when the signal is sliced with correct slice level VS. FIG. 9(c) shows slice level control signal EX prior to smoothing (averaging) detected by preamble portion slice level correction circuit 8P.

FIG. 9(d) shows binarized signal E3 obtained by slicing the signal at the position of level VH in FIG. 9(a), and FIG. 9(e) shows slice level control signal EX prior to smoothing at this time. The average voltage of control signal EX is lower than 2.5 V when being measured with reference to a circuit having a potential of 0 V. This control signal EX is input to a smoothing circuit having frequency band characteristics determined by resistor 837 and capacitor 942. This smoothing circuit is an inverting amplifier. Since the noninverting input of this inverting amplifier receives 2.5 V, its output has a smoothed slice level having a voltage of higher than 2.5 V.

When this signal EX is input to the integrator in smoothing circuit 94, slice level E9 as the integrator output is dropped. By this drop of slice level E9, upward slice level VH in FIG. 9(a) is returned to accurate slice level VS.

FIG. 9(f) shows binarized signal E3 obtained by slicing the signal at the position of level VL in FIG. 9(a), and FIG. 9(g) shows slice level control signal EX prior to smoothing at this time. The average potential of this control signal EX is higher than 2.5 V when being measured with reference to a circuit having a potential of 0 V. This control signal EX is input to a smoothing circuit having frequency band characteristics determined by resistor 837 and capacitor 942. This smoothing circuit serves as an inverting amplifier. Since the noninverting input of the inverting amplifier receives 2.5 V, its output has a smoothed slice level lower than 2.5 V.

When this signal EX is input to the integrator in smoothing circuit 94, slice level E9 as an integrator output is increased. By an increase in slice level E9 downward slice level VL in FIG. 9(a) is returned to accurate slice level VS.

The control operation in (2) will be described below. This control is performed by circuit 90 in FIG. 6.

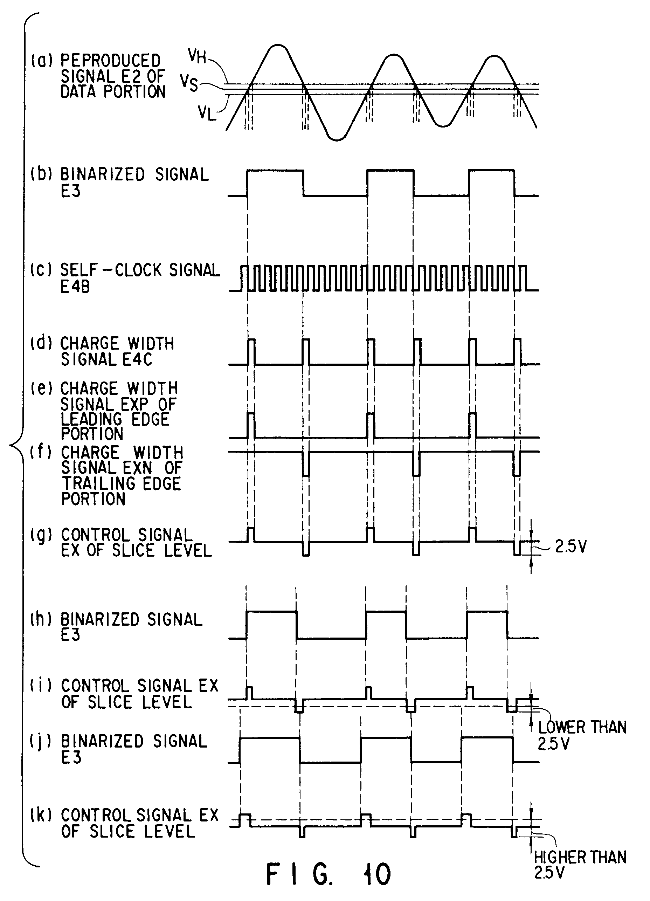

FIG. 10 shows a binarizing slice level setting operation in a data portion. FIG. 10(a) shows accurate slice level VS for the data portion of reproduced signal E2, upward slice level VH shifted upward from accurate slice level VS, and downward slice level VL slightly shifted downward from accurate slice level VS. FIG. 10(b) shows binarized signal E3 obtained by slicing the signal at the position of level VS in FIG. 10(a), FIG. 10(c) shows self-clock signal E4B of data PLL circuit 4, FIG. 10(d) shows charge width signal E4C extracted from data PLL circuit 4, FIG. 10(e) shows charge width signal (EXP in FIG. 6) obtained by extracting only the leading edge portion of binarized signal E3 of charge width signal E4C, FIG. 10(f) shows a charge width signal (EXN in FIG. 6) obtained by extracting and inverting only the trailing edge of binarized signal E3 of charge width signal E4C, and FIG. 10(g) shows slice level control signal EX obtained by synthesizing charge width signal EXP of the leading edge portion and charge width signal EXN of the trailing edge portion.

FIG. 10(h) shows binarized signal E3 obtained by slicing the signal at the position of level VH in FIG. 10(a), and FIG. 10(i) shows slice level control signal EX prior to smoothing at this time.

When binarization is performed at level VH slightly higher than the normal level, the signal width of binarized signal E3 (FIG. 10(b)) is slightly narrowed. At this time, a phase difference between binarized signal E3 and self-clock signal E4B becomes slightly different from that in the normal slice level. That is, as shown in FIG. 10(i), while the pulse width of the leading edge portion of slice level control signal EX is narrowed, as shown in FIG. 10(i), the pulse width of the trailing edge portion of slice level control signal EX is slightly widened. The average level of control signal EX is slightly lower than 2.5 V which is the level in the normal slice level. This control signal EX is input to a smoothing circuit having frequency band characteristics determined by resistor 907 and capacitor 942. This smoothing circuit serves as an inverting amplifier. When the noninverting input of the inverting amplifier receives 2.5 V, its output has a smoothed slice level higher than 2.5 V.

When this signal EX is input to the integrator in smoothing circuit 94 in FIG. 6, slice level E9 as the integrator output is dropped. By this drop of slice level E9, upward slice level VH in FIG. 10(a) is returned to accurate slice level VS.

FIG. 10(j) shows binarized signal E3 obtained by slicing the signal at the position of level VL in FIG. 10(a), and FIG. 10(k) shows slice level control signal EX prior to smoothing at this time.

When binarization is performed at level VL slightly lower than the normal level, the signal width of binarized signal E3 (FIG. 10(b)) is slightly widened. As shown in FIG. 10(k), while the pulse width of the leading edge portion of slice level control signal EX is widened, the pulse width of the trailing edge of slice level control signal Ex is narrowed. The average level of this control signal EX is slightly higher than 2.5 V obtained in the normal slice level. This control signal EX is input to a smoothing circuit having frequency band characteristics determined by resistor 907 and capacitor 942. This smoothing circuit serves as an inverting amplifier. The noninverting input of the inverting amplifier receives 2.5 V, its output has a smoothed slice level lower than 2.5 V.

When this signal EX is input to the integrator in the smoothing circuit 94, slice level E9 as the integrator output is increased. By this increase in slice level E9, downward slice level VL in FIG. 10(a) is returned to accurate slice level VS.

Finally, the control operation in (3) will be described below. This control is performed in circuit 89 in FIG. 5.

When an erroneous synchronization code caused by upward erroneous slice level L1 (FIG. 11(a)) is detected in the data portion of reproduced signal E2 by comparator 87 in FIG. 5, signal S1 is kept at high level for a predetermined period of time. During this time interval when this erroneous synchronization code is detected, both synchronization window predictive signal E7 and write area signal E10 are set at high level. For this reason, AND gate 891 outputs a high-level signal (+5 V).

This 5-V output is forward-biased to serve as slice level downward correction signal E8B through diode 893 and resistor 895. Signal E8B is input to the inverting input of operational amplifier 941 constituting the integrator in smoothing circuit 94 in FIG. 6. The inverting input potential of operational amplifier 941 tends to be increased by a high-level (+5 V) output from AND gate 891. Operational amplifier 941 outputs slice level E9 whose potential is so dropped that the inverting input potential maintains 2.5 V because the inverting input of operational amplifier 941 is subjected to an imaginary short to its noninverting input due to the feedback operation of the integrator.

Upward erroneous slice level L1 which causes the erroneous synchronization code is increased to normal level L2 by this slice level potential drop.

When an erroneous synchronization code caused by downward erroneous slice level L3 (FIG. 11(a)) is detected in the data portion of reproduced signal E2 by comparator 86 in FIG. 5, signal S2 is kept at high level during this period. During this period when this erroneous synchronization code is detected, both synchronization window predictive signal E7 and write area signal E10 are kept at high level, so that AND gate 892 outputs a low-level (0 V) signal.

This 0-V output serves as slice level upward correction signal E8A through diode 894 forward-biased and rendered conductive and resistor 896. Signal E8A is input to the inverting input of operational amplifier 941 constituting the integrator in smoothing circuit 94 in FIG. 6. The inverting input potential of operational amplifier 941 tends to be dropped by the low-level (0 V) output from AND gate 892. However, operational amplifier 941 outputs slice level E9 whose potential is so increased that its inverting input potential maintains 2.5 V because the inverting input of operational amplifier 941 is subjected to an imaginary short to its noninverting input by the feedback operation of the integrator.

By this increase in slice level potential, downward erroneous slice level L3 which causes the erroneous synchronization code is increased to normal level L2.

As described above, the apparatus of the embodiment shown in FIG. 1 can perform one of (1) control for determining the slice level of the preamble portion in accordance with the average value of the binarized signals, (2) control for determining the slice level so as to decrease the charge width signal in the data portion, and (3) control for changing the slice level by a predetermined amount when the erroneous synchronization code is detected in the data. If control (1) is not required, correction circuit 8P may be omitted from the arrangement in FIG. 1. If control (3) is not required, correction circuit 8D is omitted from the arrangement in FIG. 1. In addition, if control (2) is not required, correction signal generation circuit 90 may be omitted from the arrangement in FIG. 6.

In the information reproducing apparatus according to the present invention, the slice level of the binarizing means is changed on the basis of a charge width signal generated while data in the data storage portion, of all the information recorded on the optical disk, is read out. For this reason, even if the center of amplitude of the signal of the data portion is shifted, the slice level can be changed accordingly, thereby preventing erroneous data reproduction.

## Claims

1. An information reproducing apparatus characterized in that said apparatus reads data from an information recording medium having a plurality of block portions each having a preamble portion for storing a predetermined code for synchronizing the block portions and a data storage portion for storing data, and said apparatus comprises
reading means for reading data stored in each block portion of said recording medium and outputting a read signal,
binarizing means for binarizing the read signal output from said reading means, using a slice level,
setting means for setting the slice level of said binarizing means on the basis of a binarized signal by said binarizing means when said reading means reads data stored in the preamble portion of the block portion,
generating means for generating a charge width signal representing a phase difference between the binarized signal and a clock signal by comparing the binarized signal output from said binarizing means with the clock signal output at a predetermined interval when said reading means reads the data stored in the data storage portion of the block portion, and
changing means for changing the slice level of said binarizing means to decrease the charge width signal on the basis of the charge width signal generated by said generating means.

2. An information reproducing apparatus according to claim 1, characterized in that said setting means includes calculating means for calculating an average value of the binarized signals from said binarizing means and means for setting, as a slice level, the average value of the binarized signals which is calculated by said calculating means.

3. An information reproducing apparatus according to claim 1, characterized in that said changing means includes means for changing the slice level of said binarizing means on the basis of an average value between a first charge width signal generated at a leading edge portion of the binarized signal and a second charge width signal generated at a trailing edge portion of the binarized signal.

4. An information reproducing apparatus according to claim 1, characterized by further comprising means for discriminating that said reading means reads the data stored in the preamble portion of the block portion.

5. An information reproducing apparatus characterized by comprising
reading means for reading data stored in an information recording medium and including synchronization codes stored at a predetermined interval, and outputting a read signal,
binarizing means for binarizing the read signal output from said reading means, using a slice level,
generating means for generating a charge width signal representing a phase difference between a binarized signal and a clock signal by comparing the binarized signal from said binarizing means and the clock signal output at a predetermined interval,
first changing means for changing the slice level of said binarizing means to decrease the charge width signal on the basis of the charge width signal generated by said generating means,
detecting means for detecting a synchronization code included in the binarized signal from said binarizing means, and
second changing means for changing the slice level of said binarizing means by a predetermined amount when a code different from the synchronization code is read upon reading the synchronization code by said detecting means.

6. An information reproducing apparatus according to claim 5, characterized in that said first changing means includes means for changing the slice level of said binarizing means on the basis of an average value between a first charge width signal generated at a leading edge portion of the binarized signal and a second charge width signal generated at a trailing edge portion of the binarized signal.

7. An information reproducing apparatus according to claim 5, characterized by further comprising
means for providing first channel data corresponding to a first binarized signal obtained when a synchronization code portion in the read signal is binarized using a first slice level,
means for providing second channel data corresponding to a second binarized signal obtained when the synchronization code portion in the read signal is binarized using a second slice level,
means for providing third channel data corresponding to a third binarized signal obtained when the synchronization code portion in the read signal is binarized using a third slice level, and
means for comparing information corresponding to the binarized signals from said second binarizing means with the first, second, and third channel data, and for, when the binarized signal from said binarizing means corresponds to data except for the second channel data including information between the first and third channel data, determining that the synchronization code read by said detecting means is an erroneous synchronization code.

8. An information reproducing apparatus according to claim 5, characterized in that
said second changing means includes
means for providing first channel data including leading edge information and trailing edge information of a first binarized signal obtained when the synchronization code portion in the read signal is binarized using a first slice level,
means for providing second channel data including leading edge information and trailing edge information of a second binarized signal obtained when the synchronization code portion in the read signal is binarized using a second slice level,
means for providing third channel data including leading edge information and trailing edge information of a third binarized signal obtained when the synchronization code portion in the read signal is binarized using a third slice level,
means for comparing the leading edge information and the trailing edge information of the binarized signals from said binarizing means with the first, second, and third channels data, and discriminating correspondences between the binarized signals from said binarizing means and the first, second, and third channel data,
means for decreasing the slice level of said binarizing means by a predetermined amount when a discrimination result of said discriminating means represents the correspondence with the first channel data, and
means for increasing the slice level of said binarizing means by a predetermined amount when a discrimination result of said discriminating means represents the correspondence with the third channel data.

9. An information reproducing apparatus characterized in that said apparatus reads data from an information recording medium having a plurality of block portions each having a preamble portion for storing a predetermined code for synchronizing the block portions and a data storage portion for storing data, and said apparatus comprises
reading means for reading data stored in each block portion of said recording medium and outputting a read signal,
binarizing means for binarizing the read signal output from said reading means, using a slice level,
setting means for setting the slice level of said binarizing means on the basis of a binarized signal from said binarizing means when said reading means reads data stored in the preamble portion of the block portion,
generating means for generating a charge width signal representing a phase difference between the binarized signal and a clock signal by comparing the binarized signal output from said binarizing means with the clock signal output at a predetermined interval when said reading means reads the data stored in the data storage portion of the block portion,
first changing means for changing the slice level of said binarizing means to decrease the charge width signal on the basis of the charge width signal generated by said generating means,
detecting means for detecting a synchronization code included in the binarized signal from said binarizing means, and
second changing means for changing the slice level of said binarizing means by a predetermined amount when a code different from the synchronization code is read upon reading the synchronization code by said detecting means.

10. An information reproducing apparatus according to claim 9, characterized in that
said information recording medium comprises an optical disk on which information of the block portion is recorded in accordance with a mark length recording scheme,
said reading means includes an optical head for radiating a laser beam on said optical disk to detect a beam reflected by said optical disk, and outputting a reproduced signal corresponding to information of the block portion and having an analog signal level,
said binarizing means includes a comparison circuit for comparing a signal level of the reproduced signal from said optical head with the slice level, binarizing the reproduced signal, and outputting the binarized signal,
said setting means includes a slice level correction circuit for correcting the slice level on the basis of the binarized signal if the binarized signal includes data stored in the preamble portion of the block portion,
said generating means includes a data PLL circuit for generating the clock signal phase-locked with the binarized signal and, when the binarized signal includes data stored in the data storage portion of the block portion, generating a charge width signal representing a phase difference between the binarized signal and a clock signal and channel data including information representing a signal level change point of the binarized signal,
said detecting means includes a synchronization code detection circuit for comparing a predetermined synchronization code with the channel data, and if the predetermined synchronization code coincides with the channel data, outputting a synchronization code detection signal,
said second changing means includes an erroneous synchronization code detection circuit for comparing the channel data with first and second erroneous synchronization codes, for, when the channel data corresponds to the first erroneous synchronization code, generating a first slice level correction signal, and for, when the channel data corresponds to the second erroneous synchronization code, generating a second slice level correction signal, and
said first changing means includes a slice level control circuit for changing the slice level in response to the charge width signal, the slice level correction signal, the first slice level correction signal, and the second slice level correction signal.

11. An information reproducing apparatus according to claim 9, characterized in that said first changing means includes means for changing the slice level of said binarizing means on the basis of an average value between a first charge width signal generated at a leading edge portion of the binarized signal and a second charge width signal generated at a trailing edge portion of the binarized signal.

12. An information reproducing apparatus according to claim 9, characterized by further comprising
means for providing first channel data corresponding to a first binarized signal obtained when a synchronization code portion in the read signal is binarized using a first slice level,
means for providing second channel data corresponding to a second binarized signal obtained when the synchronization code portion in the read signal is binarized using a second slice level,
means for providing third channel data corresponding to a third binarized signal obtained when the synchronization code portion in the read signal is binarized using a third slice level, and
means for comparing information corresponding to the binarized signals from said binarizing means with the first, second, and third channel data, and for, when the binarized signal from said binarizing means corresponds to data except for the second channel data including information between the first and third channel data, determining that the synchronization code read by said detecting means is an erroneous synchronization code.

13. An information reproducing apparatus according to claim 9, characterized in that
said second changing means includes
means for providing first channel data including leading edge information and trailing edge information of a first binarized signal obtained when the synchronization code portion in the read signal is binarized using a first slice level,
means for providing second channel data including leading edge information and trailing edge information of a second binarized signal obtained when the synchronization code portion in the read signal is binarized using a second slice level,
means for providing third channel data including leading edge information and trailing edge information of a third binarized signal obtained when the synchronization code portion in the read signal is binarized using a third slice level,
means for comparing the leading edge information and the trailing edge information of the binarized signals from said binarizing means with the first, second, and third channels data, and discriminating correspondences between the binarized signals from said binarizing means and the first, second, and third channel data,
means for decreasing the slice level of said binarizing means by a predetermined amount when a discrimination result of said discriminating means represents the correspondence with the first channel data, and
means for increasing the slice level of said binarizing means by a predetermined amount when a discrimination result of said discriminating means represents the correspondence with the third channel data.

14. An information reproducing apparatus characterized in that said apparatus reads data from an optical disk having, as a unit of data storage, each of a plurality of block portions each having a preamble portion for storing a predetermined code for synchronizing the block portions and a data storage portion for storing data, the data being stored in said optical disk in accordance with a pit length and an interval between pits, comprising
light radiating means for radiating light on said optical disk to form a pit in said optical disk,
control means for controlling a light radiation operation by said light radiating means to change a length of the pit formed in said optical disk and to store data in said optical disk,
reading means for reading the data stored in said optical disk in units of blocks to output a read signal,
binarizing means for binarizing the read signal output from said reading means, using a slice level,
setting means for setting a slice level of said binarizing means on the basis of a binarized signal from said binarizing means when said reading means reads data stored in the preamble portion of the block portion,
generating means for generating a charge width signal representing a phase difference between a binarized signal and a clock signal by comparing the binarized signal from said binarizing means with the clock signal output at a predetermined interval when said reading means reads the data stored in the data storage portion of the block portion,
first changing means for changing the slice level of said binarizing means to reduce the charge width signal on the basis of the charge width signal generated by said generating means,
detecting means for detecting the synchronization code included in the binarized signal from said binarizing means, and
second changing means for changing the slice level of said binarizing means by a predetermined amount when a code different from the synchronization code is read upon reading the synchronization code by said detecting means.
